(19) **Europäisches Patentamt / European Patent Office / Office européen des brevets**

(11) **EP 4 659 845 A1**

(12) # EUROPEAN PATENT APPLICATION
published in accordance with Art. 153(4) EPC

(43) Date of publication:
**10.12.2025 Bulletin 2025/50**

(21) Application number: **24750346.9**

(22) Date of filing: **31.01.2024**

(51) International Patent Classification (IPC):
**B01D 61/36** (2006.01)   **B01D 71/02** (2006.01)

(52) Cooperative Patent Classification (CPC):
**B01D 61/36; B01D 71/02**

(86) International application number:
**PCT/JP2024/003108**

(87) International publication number:
**WO 2024/162397 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023   JP 2023015658**

(71) Applicant: **NGK Insulators, Ltd.
Nagoya-shi, Aichi 467-8530 (JP)**

(72) Inventors:
• **KOJIMA, Miyuki**
  **Nagoya-shi, Aichi 467-8530 (JP)**
• **SHIMIZU, Katsuya**
  **Nagoya-shi, Aichi 467-8530 (JP)**
• **IIDA, Kazuki**
  **Nagoya-shi, Aichi 467-8530 (JP)**
• **NAKAGAWA, Kosuke**
  **Nagoya-shi, Aichi 467-8530 (JP)**
• **MAEHARA, Sota**
  **Nagoya-shi, Aichi 467-8530 (JP)**
• **KAN, Hirofumi**
  **Nagoya-shi, Aichi 467-8530 (JP)**

(74) Representative: **Mewburn Ellis LLP
Aurora Building
Counterslip
Bristol BS1 6BX (GB)**

(54) **TRANSIENT OPERATION METHOD FOR SEPARATION DEVICE**

(57) Provided is a transient operation method for a separation device, which enables efficient heating of the separation membrane. The transient operation method for a separation device according to an embodiment of the present disclosure is a transient operation method for a separation device, the separation device including a separation membrane complex including: a separation membrane; and a substrate arranged on one side of the separation membrane, the separation device having a first flow path and a second flow path, the first flow path being positioned on a side closer to the separation membrane of the separation membrane complex, the second flow path being positioned on a side closer to the substrate of the separation membrane complex, the transient operation method including heating the separation membrane complex by supplying a gas at least to the second flow path. The gas supplied to the second flow path satisfies the formula (1): $\Delta Cp_2/\Delta T_2 < 0$ $(J/(mol \cdot K^2))$ (1) where $\Delta Cp_2$ represents a difference between a molar specific heat at constant pressure "a" at the separation membrane complex inlet of the second flow path and a molar specific heat at constant pressure "b" at the separation membrane complex outlet of the second flow path, and $\Delta T_2$ represents a difference between a gas temperature "a" at the separation membrane complex inlet of the second flow path and a gas temperature "b" at the separation membrane complex outlet of the second flow path.

FIG. 1

EP 4 659 845 A1

**Description**

Technical Field

The present disclosure relates to a transient operation method for a separation device.

Background Art

There has been known a membrane separation method that uses a separation membrane to separate a specific substance from a mixture. As such a membrane separation method, a separation method using, for example, a zeolite membrane has been proposed (see Non Patent Literature 1). A separation device including a separation membrane sometimes requires heating of the separation membrane at the time of activation of the device so that the separation membrane can fulfill a predetermined function. In this case, it is required that efficient heating throughout the separation membrane be performed.

Citation List

Non Patent Literature

[NPL 1] Development of Membrane Aided Reactor, Mitsui Zosen Technical Review, February 2003, No. 178, 115-120

Summary of Invention

Technical Problem

A primary object of the present disclosure is to provide a transient operation method for a separation device including a separation membrane, which enables efficient heating of the separation membrane.

Solution to Problem

[1] According to an embodiment of the present disclosure, there is provided a transient operation method for a separation device, the separation device including a separation membrane complex including: a separation membrane; and a substrate arranged on one side of the separation membrane, the separation device having a first flow path and a second flow path, the first flow path being positioned on a side closer to the separation membrane of the separation membrane complex, the second flow path being positioned on a side closer to the substrate of the separation membrane complex, the transient operation method including heating the separation membrane complex by supplying a gas at least to the second flow path. The gas supplied to the second flow path satisfies the following formula (1):

$$\Delta Cp_2 / \Delta T_2 < 0 \ (J/(mol \cdot K^2)) \qquad (1)$$

where $\Delta Cp_2$ represents a difference between a molar specific heat at constant pressure "a" at the separation membrane complex inlet of the second flow path and a molar specific heat at constant pressure "b" at the separation membrane complex outlet of the second flow path (molar specific heat at constant pressure "a"-molar specific heat at constant pressure "b") (in J/(mol·K) as unit), and

$\Delta T_2$ represents a difference between a gas temperature "a" at the separation membrane complex inlet of the second flow path and a gas temperature "b" at the separation membrane complex outlet of the second flow path (gas temperature "a"-gas temperature "b") (in K as unit).

[2] According to an embodiment of the present disclosure, there is provided a transient operation method for a separation device, the separation device including a separation membrane complex including: a separation membrane; and a substrate arranged on one side of the separation membrane, the separation device having a first flow path and a second flow path, the first flow path being positioned on a side closer to the separation membrane of the separation membrane complex, the second flow path being positioned on a side closer to the substrate of the separation membrane complex, the transient operation method including: heating the separation membrane complex by supplying gases to the first flow path and the second flow path, respectively, wherein $\Delta Cp_2/\Delta T_2$ of the gas supplied to the second flow path is smaller than $\Delta Cp_1/\Delta T_1$ of the gas supplied to the first flow path. The $\Delta Cp_1$ represents a difference between a molar specific heat at constant pressure "c" at the separation membrane complex inlet of the first flow path and a molar specific heat at constant pressure "d" at the separation membrane complex outlet of the first flow path (molar specific heat at constant pressure "c"-molar specific heat at constant pressure "d") (in J/(mol·K) as unit). The $\Delta T_1$ represents a difference between a gas temperature "c" at the separation membrane complex inlet of the first flow path and a gas temperature "d" at the separation membrane complex outlet of the first flow path (gas temperature "c"-gas temperature "d") (in K as unit). The $\Delta Cp_2$ represents a difference between a molar specific heat at constant pressure "a" at the separation membrane complex inlet of the second flow path and a molar specific heat at constant pressure "b" at the separation membrane complex outlet of the second flow path (molar specific heat at constant pressure "a"-molar specific heat at constant pressure "b") (in J/(mol·K) as unit). The $\Delta T_2$ represents a difference between a gas temperature "a" at the separation membrane complex inlet of the second flow path and a gas temperature "b" at the separation membrane complex outlet of the second flow path (gas temperature "a"-gas temperature "b") (in K as unit).

[3] In the transient operation method for a separation device according to the above-mentioned item [2], the gas supplied to the second flow path may satisfy the above-mentioned formula (1).

[4] In the transient operation method for a separation device according to any one of the above-mentioned items [1] to [3], the gas supplied to the second flow path may contain water vapor.

[5] In the transient operation method for a separation device according to the above-mentioned item [4], a water vapor content of the gas supplied to the second flow path may be 10 mol% or more.

[6] to [8] In the transient operation method for a separation device according to any one of the above-mentioned items [1] to [5], the gas temperature at the separation membrane complex inlet of the second flow path may be 100°C or higher.

[9] In the transient operation method for a separation device according to any one of the above-mentioned items [1] to [6], the separation membrane may be a zeolite membrane.

[10] In the transient operation method for a separation device according to the above-mentioned item [9], the zeolite membrane may be made of LTA-type zeolite.

[11] The transient operation method according to any one of the above-mentioned items [1] to [10] may be an activation method.

[12] The transient operation method for a separation device according to any one of the above-mentioned items [1] to [10] may be a stopping method.

Advantageous Effects of Invention

According to the embodiment of the present disclosure, the transient operation method for a separation device including a separation membrane, which enables efficient heating of the separation membrane, can be provided.

Brief Description of Drawings

FIG. **1** is a schematic configuration view of a separation membrane complex to be used in a transient operation method for a separation device according to one embodiment of the present disclosure.

FIG. **2** is a schematic configuration view of a separation membrane and a substrate of FIG. **1.**

FIG. **3** is a schematic configuration view of one modification example of the separation membrane complex.

FIG. **4** is a schematic cross-sectional view of the separation membrane complex of FIG. **3.**

FIG. **5** is a schematic configuration view of another modification example of the separation membrane complex.

FIG. **6** is an explanatory schematic diagram for illustrating how a separation device is operated according to one embodiment of the present disclosure.

Description of Embodiments

Embodiments of the present disclosure are described below with reference to the drawings, but the present disclosure is not limited to those embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present disclosure.

A. Transient Operation Method for Separation Device

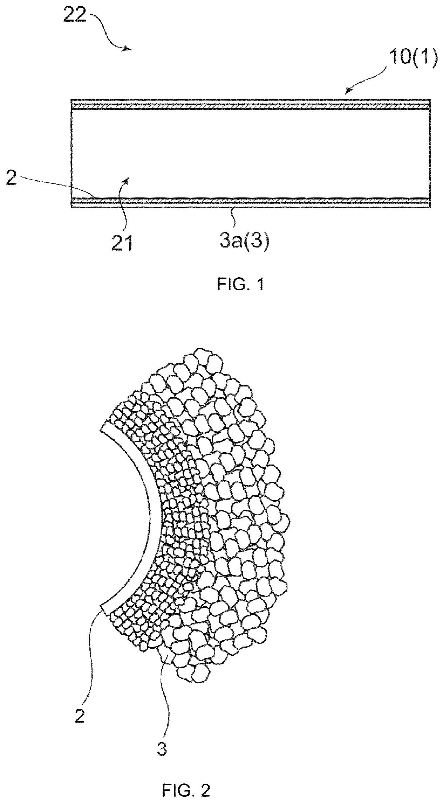

FIG. **1** is a schematic configuration view of a separation membrane complex to be used in a transient operation method for a separation device according to one embodiment of the present disclosure, and FIG. **2** is a schematic configuration view of a separation membrane and a substrate of FIG. **1.**

The transient operation method for a separation device according to one embodiment of the present disclosure is a transient operation method for a separation device **1** including a separation membrane complex **10**. The separation membrane complex **10** includes: a separation membrane **2**; and a substrate **3** arranged on one side of the separation membrane **2**. The separation device **1** has a first flow path **21** and a second flow path **22**. The first flow path **21** is positioned on a side closer to the separation membrane **2** of the separation membrane complex **10**. More specifically, the first flow path **21** can be positioned closer to the separation membrane **2** of the separation membrane complex **10** than to the substrate **3**. Further, another element (not shown) may be present or absent between the separation membrane **2** and the first flow path **21**. The second flow path **22** is positioned on a side closer to the substrate **3** of the separation membrane complex **10**. More specifically, the second flow path **22** can be positioned closer to the substrate **3** of the separation membrane complex **10** than to the separation membrane **2**. Further, another element (not shown) may be present or absent between the substrate **3** and the second flow path **22**. Although not shown, the separation membrane complex **10** may include any appropriate other elements as long as the effects of the present disclosure are obtained. The separation membrane complex **10** may include, for example, a layer or powder, which protects the whole or part of the separation membrane **2**, an element having a separation function, such as another separation membrane, and another substrate (for example, a layer that is thinner than the substrate **3** and has the same composition as that of the substrate **3**) arranged on the opposite side of the separation membrane **2** to the substrate **3**. Further, the substrate **3** may be partially exposed.

The transient operation method for the separation device **1** includes changing the temperature of (that is, heating or decreasing the temperature of) the separation membrane complex **10** by supplying a gas at least to the second flow path **22**. An embodiment in which the separation membrane complex **10** is heated is described below as a typical example. Further, the separation membrane complex **10** may be heated by supplying a gas to the first flow path **21**.

In one embodiment, after the separation device **1** is activated using the above-mentioned transient operation method, heating is continued until the separation membrane reaches a predetermined temperature (for example, a temperature that allows the separation membrane to fulfill a separation function). Then, the separation device starts a steady operation. During the steady operation, a fluid containing a substance that permeates through the separation membrane **2** (for example, a mixture containing water, which corresponds to a permeable substance, and a less permeable organic compound) is supplied to the first flow path **21**. A substance that has permeated through the separation membrane **2** flows through the second flow path **22**. Heating the separation membrane complex **10** by the transient operation method allows the separation membrane **2** to demonstrate predetermined separation performance (for example, separation performance based on permeability) during the steady operation.

In one embodiment, the gas supplied to the second flow path **22** satisfies the following formula (1):

$$\Delta Cp_2 / \Delta T_2 < 0 \ (J/(mol \cdot K^2)) \quad (1)$$

where $\Delta Cp_2$ represents a difference between a molar specific heat at constant pressure "a" at the separation membrane complex inlet of the second flow path and a molar specific heat at constant pressure "b" at the separation membrane complex outlet of the second flow path (molar specific heat at constant pressure "a"-molar specific heat at constant pressure "b") (in J/(mol·K) as unit), and

$\Delta T_2$ represents a difference between a gas temperature "a" at the separation membrane complex inlet of the second flow path and a gas temperature "b" at the separation membrane complex outlet of the second flow path (gas temperature "a"-gas temperature "b") (in K as unit).

The value of $\Delta Cp_2/\Delta T_2$ is more preferably smaller than - 0.004, still more preferably smaller than -0.007. The lower limit of $\Delta Cp_2/\Delta T_2$ is, for example, -0.1.

In the embodiment of the present disclosure, the separation membrane complex can be efficiently heated by setting $\Delta Cp_2/\Delta T_2$ (also referred to as "temperature-difference specific heat coefficient") to fall within the above-mentioned ranges. More specifically, it is assumed that heat transfer from a gas is more likely to occur on the upstream side of the separation membrane complex and heating is less likely to be achieved on the downstream side in the initial stage of heating. In the embodiment of the present disclosure, however, a temperature decrease of the gas, which may be caused along with its flow, is suppressed. Thus, efficient heating throughout the separation membrane complex can be performed. In the related art, a method of promoting heating on the downstream side by increasing the flow rate of a heating gas may be adopted. In this case, a blower and a heating device, which are peripheral equipment, are required to be increased in size, and hence an increase in energy consumption becomes an issue. According to the embodiment of the present disclosure, the separation membrane complex can be efficiently heated as described above while the flow rate of a heating gas is reduced. In other words, a major achievement of the embodiment of the present disclosure lies in having found that not a temperature-difference heat capacity coefficient (in W/K² as unit), which is calculated by multiplying a temperature-difference specific heat coefficient by a gas flow rate, but the temperature-difference specific heat coefficient is an important factor, in the examination of heat exchange between the heating gas and a body to be heated. The value of $\Delta T_2$ is affected by the flow rate of the heating gas ($\Delta T_2$ becomes smaller at a higher flow rate). Meanwhile, in the embodiment of the present disclosure, the separation membrane complex can be appropriately and efficiently heated irrelevantly of the gas flow rate by specifying the heating gas based on characteristic values including $\Delta T_2$ and controlling the characteristic values.

In another embodiment, $\Delta Cp_2/\Delta T_2$ of the gas supplied to the second flow path is smaller than $\Delta Cp_1/\Delta T_1$ of the gas supplied to the first flow path. Also in this embodiment, $\Delta Cp_2/\Delta T_2$ can be set to fall within the above-mentioned range (preferably smaller than 0, more preferably smaller than -0.004, still more preferably smaller than -0.007).

The $\Delta Cp_1$ represents a difference between a molar specific heat at constant pressure "c" at the separation membrane complex inlet of the first flow path and a molar specific heat at constant pressure "d" at the separation membrane complex outlet of the first flow path (molar specific heat at constant pressure "c"-molar specific heat at constant pressure "d") (in J/(mol·K) as unit), and the $\Delta T_1$ represents a difference between a gas temperature "c" at the separation membrane complex inlet of the first flow path and a gas temperature "d" at the separation membrane complex outlet of the first flow path (gas temperature "c"-gas temperature "d") (in K as unit). As described above, the molar specific heat at constant pressure is a molar specific heat at constant pressure when the constant pressure is atmospheric pressure and the gas has the gas temperature at the corresponding position.

In the separation membrane complex including the substrate and the separation membrane, the substrate **3** is generally formed so as to have a higher heat capacity than that of the separation membrane **2**. Thus, when $\Delta Cp_1/\Delta T_1$ and $\Delta Cp_2/\Delta T_2$ are specified as described above, the separation membrane complex **10** (substantially, the separation membrane **2)** can be efficiently heated.

The value of $\Delta Cp_1/\Delta T_1$ of the gas supplied to the first flow path is, for example, from 0 (J/(mol-K²)) to 0.06 (J/(mol·K²)).

In one embodiment, the gas temperature at the separation membrane complex inlet of the second flow path is 100°C or higher. The gas temperature at the separation membrane complex inlet of the second flow path is preferably from 100°C to 300°C, more preferably from 130°C to 260°C. When the gas temperature falls within such ranges, the above-mentioned effect becomes pronounced. Further, also in the case of heating at a higher temperature, the transient operation method of the present disclosure can be preferably used when the gas temperature falls within the above-mentioned ranges. It is apparent that a gas containing water vapor may be continuously used for heating at a temperature exceeding the above-mentioned ranges. The gas temperature at the separation membrane complex inlet of the first flow path is, for example, from 100°C to 300°C.

In one embodiment, the gas supplied to the second flow path contains water vapor. The temperature-difference specific heat coefficient can be controlled by a water vapor content. In one embodiment, the gas is supplied to the second flow path under conditions under which condensation does not form on or in the separation membrane complex.

In one embodiment, the water vapor content of the gas supplied to the first flow path is less than the water vapor content of the gas supplied to the second flow path. The separation membrane complex can be efficiently heated (for example, heating in the latter stage can be efficiently performed) by using a high-humidity gas as the gas supplied to the second flow path. In one embodiment, the gas is supplied to the first flow path under conditions under which condensation does not form on or in the separation membrane complex.

The water vapor content of the gas supplied to the second flow path is preferably 10 mol% or more, more preferably 20 mol% or more. When the water vapor content falls within such ranges, the efficiency of heating of the separation membrane is remarkably increased. Further, the upper limit of the water vapor content of the gas supplied to the second flow path is, for example, 100 mol%. In one embodiment, when a water vapor partial pressure $P(H_2O)$ and a saturation water vapor pressure $P^{sat}(H_2O)$ of the gas supplied to the second flow path have a relationship of $[P(H_2O)/P^{sat}(H_2O)<1]$, the water vapor content of the gas supplied to the second flow path falls within the above-mentioned ranges.

In one embodiment, the pressure of the first flow path **21** and/or the second flow path **22** is adjusted in accordance with the temperature of the environment under which the separation membrane complex **10** (substantially, the separation membrane **2)** is placed. In the transient operation method for a separation device, the initial temperature of the separation membrane **2** is, for example, from 0°C to 35°C, and an initial pressure in the first flow path **21** is, for example, from 0.1 MPaG to 20 MPaG. Further, at the time of completing the activation of the separation device, the temperature of the separation membrane **2** is, for example, from 100°C to 350°C, and the pressure in the first flow path **21** is, for example, from 0.1 MPaG to 20 MPaG.

Herein, the term "transient operation method" refers to a concept including an activation method and a stopping method. Thus, in the description above of the embodiment, the "transient operation method" may be an "activation method" (that is, the "transient operation method" may be replaced by an "activation method") or may be a "stopping method". Herein, the "activation method" involves heating of the separation membrane. Further, the "stopping method" involves decreasing the temperature of the separation membrane.

B. Separation Device

B-1. Separation Membrane Complex

As illustrated in FIG. **1,** the separation device **1** typically includes the separation membrane complex **10** including: the substrate **3;** and the separation membrane **2.** Although not shown, the separation membrane complex **10** is housed in any appropriate case for use. The separation membrane complex **10** typically extends in the same direction as the direction in which the first flow path **21** extends. The length of the separation membrane complex **10** may be appropriately and suitably adjusted. In the separation membrane complex, the weight ratio of the substrate **3** and the separation membrane **2** (substrate/separation membrane) is, for example, from 100 to 200,000. Further, the heat capacity ratio of the substrate **3** and the separation membrane **2** (substrate/separation membrane) is, for example, from 50 to 300,000.

B-1-1. Substrate

The substrate **3** supports the separation membrane **2.** In one embodiment, the substrate **3** is a porous substrate. The porous substrate has, for example, a so-called monolith-type structure including: a framework being continuous in a three-dimensional network pattern; and communication holes defined by the framework. The substrate **3** may contain a component for forming the separation membrane **2.**

The specific heat of a material for forming the substrate is, for example, from 450 J/kgK to 1,100 J/kgK.

The porous substrate may be formed of any appropriate material. Typical examples of a material for the porous substrate include a ceramic sintered compact. Examples of the ceramic sintered compact include alumina, silica, mullite, zirconia, titania, yttria, silicon nitride, silicon carbide, and cordierite. The ceramic sintered compacts can be used alone or in combination.

The porous substrate may contain an inorganic binding material. Examples of the inorganic binding material include titania, mullite, easily sinterable alumina, silica, glass frit, clay mineral, and easily sinterable cordierite. The inorganic binding materials can be used alone or in combination.

The porous substrate may be made up of a single layer or may have a multilayer structure in which multiple layers are stacked. In one embodiment, as illustrated in FIG. **2,** the porous substrate has a multilayer structure including a plurality of layers being different in pore diameter. In this case, it is preferred that the pore diameter of the layer closer to the separation membrane **2** be smaller.

The average pore diameter of the porous substrate is, for example, from 0.01 $\mu$m to 70 $\mu$m, preferably from 0.05 $\mu$m to 25 $\mu$m. The average pore diameter of the porous substrate on the separation membrane side is from 0.01 $\mu$m to 1 $\mu$m, preferably from 0.05 $\mu$m to 0.5 $\mu$m. With regard to the distribution of the pore diameters in the whole including the surface and inside of the porous substrate, D5 is, for example, from 0.01 $\mu$m to 50 $\mu$m, D50 is, for example, from 0.05 $\mu$m to 70 $\mu$m, and D95 is, for example, from 0.1 $\mu$m to 2,000 $\mu$m. The porosity of the porous substrate on the separation membrane side is, for example, from 25% to 50%. The average pore diameter of the porous substrate may be measured with, for example, a mercury porosimeter, a perm porometer, or a nano-perm porometer.

As illustrated in FIG. **1,** the substrate **3** typically separates the first flow path **21** and the second flow path **22** from each other. The substrate **3** may have any appropriate shape. Examples of the shape of the substrate **3** include a cylindrical shape, a honeycomb shape, and a plate-like shape.

In one embodiment, the substrate **3** is a cylindrical substrate **3a**. Examples of the sectional shape of the cylindrical substrate **3a** in the direction orthogonal to the length direction of the cylindrical substrate **3a** include a triangular shape, a rectangular shape, a pentagonal shape, a polygonal shape having six or more sides, a circular shape, and an elliptical shape, and a preferred one is a circular shape. The outer diameter and the length of the cylindrical substrate may be appropriately set in accordance with its purpose.

In this embodiment, the internal space of the cylindrical substrate **3a** (space defined by the inner peripheral surface of the cylindrical substrate) includes any one of the first flow path **21** or the second flow path **22,** and the external space of the cylindrical substrate **3a** (space outside the outer peripheral surface of the cylindrical substrate) includes another one of the first flow path **21** or the second flow path **22.** In the illustrated example, the internal space of the cylindrical substrate **3a** includes the first flow path **21,** and the external space of the cylindrical substrate **3a** includes the second flow path **22.**

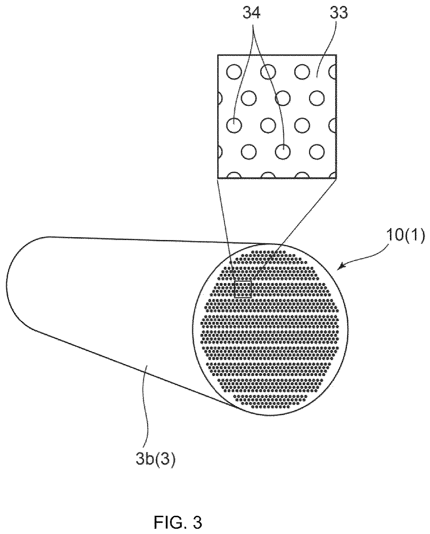

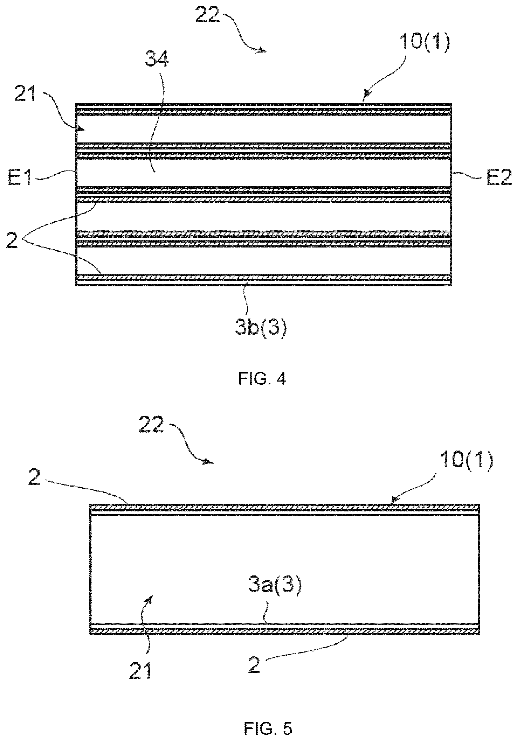

In another embodiment, as illustrated in FIG. 3 and FIG. 4, the substrate **3** is a honeycomb-shaped substrate **3b.** The honeycomb-shaped substrate **3b** includes a partition wall **33** that defines a plurality of cells **34.** The cells **34** are each formed in a cylindrical shape so as to penetrate the honeycomb-shaped substrate **3b** in its longitudinal direction.

The cells **34** extend from a first end surface **E1** (inflow end surface) to a second end surface **E2** (outflow end surface) of the honeycomb-shaped substrate **3b** in the longitudinal direction (axial direction) of the honeycomb-shaped substrate **3b** (see FIG. 4). The cells **34** each have any appropriate shape in cross section taken in the direction orthogonal to the length direction of the honeycomb-shaped substrate **3b.** Examples of the sectional shape of the cell include a triangular shape, a rectangular shape, a pentagonal shape, a polygonal shape having six or more sides, a circular shape, and an elliptical shape. The sectional shape and the size of the cell may be the same for all the cells or may be different for at least some of the cells. A preferred one of the above-mentioned sectional shapes of the cell is a circular shape.

The distance between the central axes of the plurality of cells **34** is, for example, from 0.3 mm to 10 mm. A cell density (that is, the number of cells **34** per unit area) in cross section taken in the direction orthogonal to the length direction of the honeycomb-shaped substrate may be appropriately set in accordance with its purpose. The cell density may be, for example, from 4 cells/cm$^2$ to 320 cells/cm$^2$. When the cell density falls within such a range, sufficient strength and effective geometric surface area (GSA) of the honeycomb-shaped substrate can be ensured.

The honeycomb-shaped substrate **3b** has any appropriate shape (overall shape). Examples of the honeycomb-shaped substrate include a columnar shape with a circular bottom surface, an elliptical cylindrical shape with an elliptical bottom surface, a prism shape with a polygonal bottom surface, and a pillar shape with an indefinite bottom surface. The honeycomb-shaped substrate **3b** of the illustrated example has a columnar shape. The outer diameter and the length of the honeycomb-shaped substrate may be appropriately set in accordance with its purpose.

In this embodiment, the internal space of each of the plurality of cells **34** (space defined by the inner peripheral surface of the cell) includes any one of the first flow path **21** or the second flow path **22,** and the external space of the honeycomb-shaped substrate **3b** (space outside the outer peripheral surface of the honeycomb-shaped substrate) includes another one of the first flow path **21** or the second flow path **22.** In the illustrated example, the internal space of the cell **34** includes the first flow path **21,** and the external space of the honeycomb-shaped substrate **3b** includes the second flow path **22.**

B-1-2. Separation Membrane

The separation membrane **2** is typically directly provided on the surface of the substrate **3.** The separation membrane **2** may face the first flow path **21** (see FIG. 1 and FIG. 4) or may face the second flow path **22** (see FIG. 5).

In one embodiment, the separation membrane **2** faces the first flow path **21.**

In FIG. **1,** the substrate **3** is the cylindrical substrate **3a.** The separation membrane **2** is formed on the inner surface of the cylindrical substrate **3a.** In the illustrated example, the first flow path **21** is defined in a portion (typically, the central portion) of the separation membrane complex **10,** in which the separation membrane **2** is absent, in cross section.

Further, in FIG. **4,** the substrate **3** is the honeycomb-shaped substrate **3b.** The separation membrane **2** is formed on the inner surface of each of the plurality of cells **34.** The first flow path **21** is defined in a portion (typically, the central portion) of the cell **34,** in which the separation membrane **2** is absent, in cross section.

As in the illustrated example, the separation membrane **2** may be formed entirely on the inner surface of the cylindrical substrate **3a** or the inner surface of the cell **34** (that is, so as to surround the first flow path **21)** or may be formed partially on the inner surface of the cylindrical substrate **3a** or the inner surface of the cell **34.** The separation membrane that is formed so as to surround the first flow path can improve separation efficiency.

The separation membrane **2** allows a specific substance to permeate therethrough and be separated from the mixture by making use of, for example, a difference in molecular size and/or a difference in adsorptivity.

The separation membrane **2** may be formed of any appropriate material. A typical example of the material for the separation membrane **2** is an inorganic material. Examples of the inorganic material include zeolite, silica, and carbon. The inorganic materials can be used alone or in combination. The specific heat of the material for forming the separation membrane **2** is, for example, from 450 J/kgK to 900 J/kgK.

When the substance to be separated contains water, a preferred example of the material for the separation membrane **2** is zeolite. In one embodiment, the separation membrane **2** is a zeolite membrane.

The zeolite membrane includes a membrane formed from zeolite on the surface of the substrate. The zeolite membrane may contain two or more kinds of zeolites different from each other in structure or composition.

Examples of the zeolite for forming the zeolite membrane include: zeolite in which an atom (T atom) positioned on the center of an oxygen tetrahedron ($TO_4$) for forming the zeolite is formed of only Si, or Si and Al; AlPO-type zeolite in which the T atom is formed of Al and P; SAPO-type zeolite in which the T atom is formed of Si, Al, and P; MAPSO-type zeolite in which the T atom is formed of magnesium (Mg), Si, Al, and P; and ZnAPSO-type zeolite in which the T atom is formed of zinc (Zn), Si, Al, and P. Part of the T atom may be substituted with any other element.

Examples of the zeolite include AEI-type, AEN-type, AFN-type, AFV-type, AFX-type, BEA-type, CHA-type, DDR-type, ERI-type, ETL-type, FAU-type (X-type or Y-type), GIS-type, LEV-type, LTA-type, MEL-type, MFI-type, MOR-type, PAD-type, RHO-type, SAT-type, and SOD-type zeolites. Of those zeolites, a LTA-type zeolite is preferred.

The maximum number of ring members of the zeolite is, for example, 12 or less, preferably 10 or less, more preferably 8 or less, and is, for example, 6 or more.

The zeolite film contains $SiO_2$ and $Al_2O_3$. The zeolite film may further contain an alkali metal. The alkali metal is, for example, sodium (Na) or potassium (K).

The molar ratio "$SiO_2/Al_2O_3$" in the zeolite film is, for example, 100 or less, preferably 10 or less, more preferably less than 5. The lower limit of the molar ratio "$SiO_2/Al_2O_3$" in the zeolite film is typically 2. The molar ratio "$SiO_2/Al_2O_3$" may be measured by, for example, scanning electron microscopy-energy-dispersive X-ray spectroscopy (SEM-EDX; X-ray accelerating voltage: 10 kV).

The average pore diameter of the separation membrane **2** can be appropriately and suitably selected in accordance with the substance to be separated. The average pore diameter of the separation membrane **2** is, for example, from 0.2 nm to 1 nm, preferably from 0.3 nm to 0.5 nm. A separation membrane **2** having a smaller average pore diameter has higher selectivity. The average pore diameter of the separation membrane **2** is smaller than the average pore diameter of the substrate **3**. When the separation membrane **2** is a zeolite membrane, the arithmetic average of the short diameter and long diameter of an n-membered ring pore, where "n" represents the maximum number of members in the ring of the zeolite, is adopted as the average pore diameter. The term "n-membered ring pore" refers to such a pore that the number of oxygen atoms in a portion in which the oxygen atom are bonded to T atoms to form a ring structure is "n". When the zeolite has a plurality of n-membered ring pores equal to each other in "n", the arithmetic average of the short diameters and long diameters of all the n-membered ring pores is adopted as the average pore diameter of the zeolite. The average pore diameter of the zeolite membrane is determined by the framework structure of the zeolite and may be obtained from a value disclosed in the "Database of Zeolite Structures" of the International Zeolite Association, [online], from the Internet <URL: http://www.iza-structure.org/databases/>.

The thickness of the separation membrane **2** is, for example, from 0.05 $\mu$m to 30 $\mu$m, preferably from 0.1 $\mu$m to 20 $\mu$m, more preferably from 0.5 $\mu$m to 10 $\mu$m. A thicker separation membrane has higher selectivity. A thinner separation membrane increases a permeation rate.

The surface roughness (Ra) of the separation membrane **2** is, for example, 5 $\mu$m or less, preferably 2 $\mu$m or less, more preferably 1 $\mu$m or less, still more preferably 0.5 $\mu$m or less. The surface roughness (Ra) can be measured, for example, in conformity with JIS B 0601.

The separation membrane **2** may be formed by any appropriate method in accordance with a material for forming the membrane. For example, the zeolite membrane may be obtained by: applying zeolite serving as a seed crystal onto a separation membrane; immersing the substrate to which the seed crystal has adhered in a starting material solution; and growing zeolite from the seed crystal serving as a nucleus through hydrothermal synthesis. The starting material solution contains, for example, a silica source, an alumina source, organic matter, an alkali source, or water. A heating temperature in the hydrothermal synthesis is set to, for example, from 60°C to 200°C. A heating time is set to, for example, from 1 hour to 240 hours. In addition, the separation membrane may be formed by using a starting material slurry obtained by mixing an organic binder, a ceramic starting material, and a solvent.

B-2. Other Configurations

The above-mentioned separation device **1** may include any appropriate element in addition to the separation membrane complex **10**. The separation device **1** may include, for example: a supply unit for supplying a fluid (a gas supplied at the time of activation, the mixture supplied after the activation) or the like; a heating device for heating the fluid; and a recovery unit for recovering the fluid that has passed through the separation membrane complex. Examples of the heating device include a reactor involving a chemical reaction, a heater, and a heat exchanger. Th separation device **1** may further include a pressure adjustment unit **7** capable of adjusting the pressure in the first flow path **21** and/or the second flow path **22** of the separation membrane complex **10**. The separation device **1** may further include a control unit **8** capable of controlling the operation of the separation device **1**. Components of the separation device other than the separation membrane complex are described in, for example, WO 2018/225325 A1. The description of this publication is herein incorporated by reference.

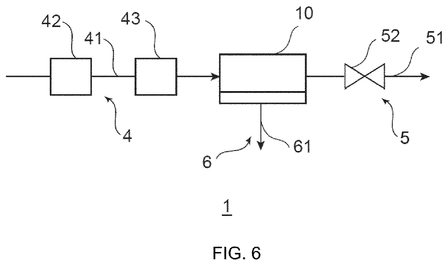

In one embodiment, as illustrated in FIG. **6,** the separation device **1** includes, in addition to the separation membrane complex **10:** a supply unit **4** that supplies a mixture to the first flow path **21** of the separation membrane complex **10;** a first recovery unit **5** that recovers a fluid having passed through the first flow path **21;** and a second recovery unit **6** that recovers a permeate substance that has permeated through the separation membrane **2.** The separation device **1** of the illustrated example is configured so as to be capable of adjusting the temperature, the pressure, and the flow rate of the mixture passing through the first flow path. FIG. **6** is an explanatory diagram for illustrating one embodiment of the present disclosure, and the present disclosure is not limited to this embodiment.

The supply unit **4** of the illustrated example can adjust the temperature and the flow rate of the mixture supplied to (flowing into) the first flow path **21.** The supply unit **4** includes a supply line **41,** a heating device **42,** and a flow rate adjuster **43.**

The supply line **41** is a pipe for supplying the mixture to the first flow path **21.** The upstream end portion of the supply line **41** in the direction of supply of the mixture is connected to, for example, a storage tank that stores the mixture, although not shown. The downstream end portion of the supply line **41** in the direction of supply of the mixture is connected to the inflow port of the first flow path **21** of the separation membrane complex **10.**

The heating device **42** is provided to the supply line **41** and can heat the mixture passing through the supply line **41.** The heating device **42** can have any appropriate configuration.

The flow rate adjuster **43** can adjust the flow rate of the mixture passing through the supply line **41.** The flow rate adjuster **43** can have any appropriate configuration. In the illustrated example, the flow rate adjuster **43** is provided between the heating device **42** and the separation membrane complex **10** in the supply line **41.**

The supply unit **4** may include other devices as required. For example, other devices may be provided between the flow rate adjuster **43** and the separation membrane complex **10** in the supply line **41.**

The first recovery unit **5** of the illustrated example can adjust the pressure in the first flow path **21.** The first recovery unit 5 includes a first recovery line **51** and a pressure adjustment valve **52.**

The first recovery line **51** is a pipe through which a fluid that has passed through the first flow path **21** of the separation membrane complex **10** is allowed to pass. The upstream end portion of the first recovery line **51** in the direction of passage of the fluid is connected to the outflow port of the first flow path **21** of the separation membrane complex **10.** The downstream end portion of the first recovery line **51** in the direction of passage of the fluid is connected to, for example, a storage tank, although not shown.

The pressure adjustment valve **52** is provided to the first recovery line **51.** The pressure adjustment valve **52** can adjust the opening degree of the first recovery line **51,** and in turn, can adjust the pressure in the first flow path **21.**

The second recovery unit **6** of the illustrated example includes a second recovery line **61.**

The second recovery line **61** is a pipe through which a fluid that has passed through the second flow path **22** is allowed to pass from the second flow path **22** of the separation membrane complex **10.** The upstream end portion of the second recovery line **61** in the direction of passage of the fluid is connected to the outflow port of the second flow path **22** of the separation membrane complex **10.** The downstream end portion of the second recovery line **61** in the direction of passage of the fluid is connected to, for example, a storage tank, although not shown.

In the embodiment described above, the supply unit **4** on the upstream side with respect to the separation membrane complex **10** adjusts the temperature and the flow rate of the mixture supplied to (flowing into) the first flow path **21,** and the first recovery unit **5** on the downstream side with respect to the separation membrane complex **10** adjusts the pressure on the mixture in the first flow path **21.** However, the configuration of the separation device **1** is not limited to that described above. The supply unit **4** may be configured so as to be capable of adjusting the pressure on the mixture in the first flow path **21.** Further, the first recovery unit **5** may be configured so as to be capable of adjusting the flow rate of the mixture passing through the first flow path **21.**

Industrial Applicability

The transient operation method for a separation device according to the embodiment of the present disclosure is used for the separation of a specific substance in a mixture, in particular, suitably used for the separation of water from a water-containing mixture.

Reference Signs List

**1** separation device
**2** separation membrane
**3** substrate

**21** first flow path
**22** second flow path

**Claims**

1. A transient operation method for a separation device, the separation device including a separation membrane complex including: a separation membrane; and a substrate arranged on one side of the separation membrane, the separation device having a first flow path and a second flow path, the first flow path being positioned on a side closer to the separation membrane of the separation membrane complex, the second flow path being positioned on a side closer to the substrate of the separation membrane complex,

   the transient operation method comprising heating the separation membrane complex by supplying a gas at least to the second flow path,
   wherein the gas supplied to the second flow path satisfies the following formula (1):

   $$\Delta Cp_2/\Delta T_2 < 0 \ (J/(mol \cdot K^2)) \quad (1)$$

   where $\Delta Cp_2$ represents a difference between a molar specific heat at constant pressure "a" at the separation membrane complex inlet of the second flow path and a molar specific heat at constant pressure "b" at the separation membrane complex outlet of the second flow path (molar specific heat at constant pressure "a"-molar specific heat at constant pressure "b") (in J/(mol·K) as unit), and
   $\Delta T_2$ represents a difference between a gas temperature "a" at the separation membrane complex inlet of the second flow path and a gas temperature "b" at the separation membrane complex outlet of the second flow path (gas temperature "a"-gas temperature "b") (in K as unit).

2. A transient operation method for a separation device, the separation device including a separation membrane complex including: a separation membrane; and a substrate arranged on one side of the separation membrane, the separation device having a first flow path and a second flow path, the first flow path being positioned on a side closer to the separation membrane of the separation membrane complex, the second flow path being positioned on a side closer to the substrate of the separation membrane complex,

   the transient operation method comprising heating the separation membrane complex by supplying gases to the first flow path and the second flow path, respectively,
   wherein $\Delta Cp_2/\Delta T_2$ of the gas supplied to the second flow path is smaller than $\Delta Cp_1/\Delta T_1$ of the gas supplied to the first flow path,
   wherein the $\Delta Cp_1$ represents a difference between a molar specific heat at constant pressure "c" at the separation membrane complex inlet of the first flow path and a molar specific heat at constant pressure "d" at the separation membrane complex outlet of the first flow path (molar specific heat at constant pressure "c"-molar specific heat at constant pressure "d") (in J/(mol·K) as unit),
   wherein the $\Delta T_1$ represents a difference between a gas temperature "c" at the separation membrane complex inlet of the first flow path and a gas temperature "d" at the separation membrane complex outlet of the first flow path (gas temperature "c"-gas temperature "d") (in K as unit),
   wherein the $\Delta Cp_2$ represents a difference between a molar specific heat at constant pressure "a" at the separation membrane complex inlet of the second flow path and a molar specific heat at constant pressure "b" at the separation membrane complex outlet of the second flow path (molar specific heat at constant pressure "a"-molar specific heat at constant pressure "b") (in J/(mol·K) as unit), and
   wherein the $\Delta T_2$ represents a difference between a gas temperature "a" at the separation membrane complex inlet of the second flow path and a gas temperature "b" at the separation membrane complex outlet of the second flow path (gas temperature "a"-gas temperature "b") (in K as unit).

3. The transient operation method for a separation device according to claim 2, wherein the gas supplied to the second flow path satisfies the following formula (1):

   $$\Delta Cp_2/\Delta T_2 < 0 \ (J/(mol \cdot K^2)) \quad (1).$$

4. The transient operation method for a separation device according to claim 1 or 2, wherein the gas supplied to the second flow path contains water vapor.

5. The transient operation method for a separation device according to claim 4, wherein a water vapor content of the gas supplied to the second flow path is 10 mol% or more.

6. The transient operation method for a separation device according to any one of claims 1 to 3, wherein the gas temperature at the separation membrane complex inlet of the second flow path is 100°C or higher.

7. The transient operation method for a separation device according to claim 4, wherein the gas temperature at the separation membrane complex inlet of the second flow path is 100°C or higher.

8. The transient operation method for a separation device according to claim 5, wherein the gas temperature at the separation membrane complex inlet of the second flow path is 100°C or higher.

9. The transient operation method for a separation device according to any one of claims 1 to 3, wherein the separation membrane is a zeolite membrane.

10. The transient operation method for a separation device according to claim 9, wherein the zeolite membrane is made of LTA-type zeolite.

11. The transient operation method according to claim 1 or 2, wherein the transient operation method is an activation method.

12. The transient operation method according to claim 1 or 2, wherein the transient operation method is a stopping method.

22

10(1)

2

21 3a(3)

FIG. 1

2

3

FIG. 2

FIG. 3

22

34

21

E1

2

10(1)

E2

3b(3)

FIG. 4

22

2

10(1)

3a(3)

21

2

FIG. 5

FIG. 6

# EP 4 659 845 A1

## INTERNATIONAL SEARCH REPORT

International application No.

**PCT/JP2024/003108**

### A. CLASSIFICATION OF SUBJECT MATTER

***B01D 61/36***(2006.01)i; ***B01D 71/02***(2006.01)i
FI:   B01D61/36; B01D71/02

According to International Patent Classification (IPC) or to both national classification and IPC

### B. FIELDS SEARCHED

Minimum documentation searched (classification system followed by classification symbols)

B01D53/22; B01D61/00-71/82; C02F1/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-226486 A (TORAY IND., INC.) 07 November 2013 (2013-11-07) claims, examples | 1-12 |
| A | JP 2017-104827 A (NGK INSULATORS, LTD.) 15 June 2017 (2017-06-15) claims, examples | 1-12 |
| A | JP 11-347379 A (MITSUBISHI HEAVY IND., LTD.) 21 December 1999 (1999-12-21) claims, drawings | 1-12 |
| A | WO 2018/225792 A1 (NGK INSULATORS, LTD.) 13 December 2018 (2018-12-13) claims, examples | 1-12 |
| A | WO 2016/024580 A1 (NGK INSULATORS, LTD.) 18 February 2016 (2016-02-18) claims, examples | 1-12 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/003108**

| Patent document cited in search report | | | Publication date (day/month/year) | Patent family member(s) | | | Publication date (day/month/year) |
|---|---|---|---|---|---|---|---|
| JP | 2013-226486 | A | 07 November 2013 | (Family: none) | | | |
| JP | 2017-104827 | A | 15 June 2017 | (Family: none) | | | |
| JP | 11-347379 | A | 21 December 1999 | (Family: none) | | | |
| WO | 2018/225792 | A1 | 13 December 2018 | JP | 2019-150823 | A | |
| | | | | US | 2020/0101419 | A1 | |
| | | | | claims, examples | | | |
| | | | | JP | 2020-175391 | A | |
| | | | | JP | 2020-175392 | A | |
| | | | | US | 2020/0001250 | A1 | |
| | | | | US | 2020/0009509 | A1 | |
| | | | | US | 2020/0023319 | A1 | |
| | | | | US | 2020/0030753 | A1 | |
| | | | | WO | 2018/225325 | A1 | |
| | | | | WO | 2018/180527 | A1 | |
| | | | | WO | 2018/180563 | A1 | |
| | | | | WO | 2018/180564 | A1 | |
| | | | | WO | 2018/180243 | A1 | |
| | | | | CN | 110709154 | A | |
| | | | | CN | 110446545 | A | |
| | | | | CN | 110446543 | A | |
| | | | | CN | 110446544 | A | |
| WO | 2016/024580 | A1 | 18 February 2016 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018225325 A1

**Non-patent literature cited in the description**

- Development of Membrane Aided Reactor. *Mitsui Zosen Technical Review*, February 2003, vol. 178, 115-120